# EUROPEAN PATENT APPLICATION

(11) **EP 4 847 306 A1**
(43) Date of publication of application: **02.12.2026**
(21) Application number: 25761123.6
(22) Date of filing: 28.02.2025
(51) Int. Cl.: B60N 2/01, B60N 2/02, B60R 16/037

(54) **CABIN SPACE CONTROL METHOD AND APPARATUS, DEVICE, AND STORAGE MEDIUM**

(30) Priority: 01.03.2024 CN 202410236753
(71) Applicant: ZHEJIANG ZEEKR INTELLIGENT TECHNOLOGY CO., LTD., Ningbo, Zhejiang 315899 (CN); ZHEJIANG GEELY HOLDING GROUP CO., LTD, Hangzhou, Zhejiang 310051 (CN)
(72) Inventor: XIE, Jingjing, Ningbo, Zhejiang 315899 (CN); FAN, Wenxin, Ningbo, Zhejiang 315899 (CN); GU, Fangfang, Ningbo, Zhejiang 315899 (CN); LI, Zhifan, Ningbo, Zhejiang 315899 (CN); ZHANG, Bin, Ningbo, Zhejiang 315899 (CN); LIU, Si, Ningbo, Zhejiang 315899 (CN); YANG, Dacheng, Ningbo, Zhejiang 315899 (CN); XU, Hongzan, Ningbo, Zhejiang 315899 (CN)
(74) Representative: Murgitroyd & Company
(86) International application number: PCT/CN2025/079835
(87) International publication number: WO 2025/180489

(57) **Abstract**

Disclosed are a seat mode-based cabin space control method and apparatus, a device, and a storage medium. The seat mode-based cabin space control method includes: receiving a control instruction for controlling different control objects in the seat mode, where the seat mode integrates atomic capabilities of the different control objects (110); and in response to the control instruction, based on the atomic capabilities of the different control objects in the seat mode, at least linking different seats to perform an action of changing a seat layout in a preset execution manner of the seat mode, where changing the layout of the different seats is used to form a cabin space (120). Accordingly, at least different seats of the user are linked to perform the action of changing the seat layout, thereby forming the corresponding cabin space, so that a requirement for adjusting a plurality of cabin seats can be met, an adjustment range is expanded, and different user requirements are met.

## Description

### TECHNICAL FIELD

Embodiments of the present disclosure relate to, but are not limited to, the field of vehicle control technologies, and in particular, to, but are not limited to, cabin space control.

### BACKGROUND

With the development of vehicle technology, cabin and seat spaces have become a major focus of current research exploring how to make vehicles more intelligent.

### SUMMARY

The present disclosure provides a cabin space control method, including: receiving a control instruction for controlling a seat mode, where the seat mode integrates atomic capabilities of different control objects and has a preset execution manner, and the different control objects include at least two seats; and in response to the control instruction, based on the atomic capabilities of the different control objects, linking the at least two seats to perform an action of changing a seat layout in the preset execution manner.

In some embodiments, in response to the control instruction, in response to the control instruction, based on the atomic capabilities of the different control objects, linking the at least two seats to perform the action of changing the seat layout in the preset execution manner, includes: in response to the control instruction, determining whether a starting condition of the seat mode is satisfied; and in a case that the starting condition of the seat mode is satisfied, based on the atomic capabilities of the different control objects, linking the at least two seats to perform the action of changing the seat layout in the preset execution manner.

In some embodiments, determining whether the starting condition of the seat mode is satisfied, includes: obtaining a driving state of a vehicle, an environment dataset of a cabin interior environment, a usage state of each of the at least two seats, and a usage state of a center armrest; and determining whether the starting condition of the seat mode is satisfied based on the driving state, the environment dataset, the usage state of each seat, and the usage state of the center armrest.

In some embodiments, the method further includes: in a case that the starting condition of the seat mode is not satisfied, generating corresponding prompt information, and providing a prompt.

In some embodiments, receiving the control instruction for controlling the seat mode, includes: when the vehicle is parked, and in a case where it is determined that an activation condition of the seat mode is satisfied, receiving the control instruction.

In some embodiments, parameters for the seat mode comprise a basic parameter and a custom parameter; and for an atomic capability of each of the control objects, the atomic capability comprises a trigger condition, a trigger, and an executed action. Receiving the control instruction for controlling the seat mode, includes: receiving a control instruction for controlling an adjusted seat mode. Based on the atomic capabilities of the different control objects, linking the at least two seats to perform the action of changing the seat layout in the preset execution manner, includes: obtaining, based on atomic capabilities corresponding to adjusted parameters for the seat mode, trigger signals detected by triggers of corresponding atomic capabilities, where the atomic capabilities corresponding to the adjusted parameters include at least one of an atomic capability corresponding to an adjusted basic parameter or an atomic capability corresponding to an adjusted custom parameter; and in a case that the trigger signals satisfy trigger conditions, linking the at least two seats to perform the action of changing the seat layout in the preset execution manner.

In some embodiments, the method further includes: obtaining the adjusted seat mode by: receiving an adjustment instruction for adjusting the parameters for the seat mode; adjusting the basic parameter according to the adjustment instruction to generate the adjusted basic parameter; and/or adjusting the custom parameter according to the adjustment instruction to generate the adjusted custom parameter; and generating the adjusted seat mode according to at least one of the atomic capability corresponding to the adjusted basic parameter or the atomic capability corresponding to the adjusted custom parameter.

In some embodiments, the method further includes: determining whether an adjustment operation in the adjustment instruction conforms to a specification; and in a case that the adjustment operation conforms to the specification, adjusting the basic parameter according to the adjustment operation to generate the adjusted basic parameter.

In some embodiments, the method further includes: receiving a generation instruction for generating a custom seat mode; displaying a custom parameter for the custom seat mode; receiving input information for the custom parameter to obtain custom parameter information; and generating the custom seat mode according to an atomic capability corresponding to the custom parameter information.

In some embodiments, the seat mode is a current seat mode. In response to the control instruction, based on the atomic capabilities of the different control objects, linking the at least two seats to perform the action of changing the seat layout in the preset execution manner, includes: in response to the control instruction, taking a seat position at an end of a previous seat mode as an initial position for the current seat mode; determining difference data between the initial position for the current seat mode and a target position for the current seat mode; and based on an atomic capability corresponding to the difference data, linking the at least two seats to perform the action of changing the seat layout in the preset execution manner; and/or, the method further includes: during a process of linking the at least two seats to perform the action of changing the seat layout in the preset execution manner, displaying prompt information for prompting that the seat mode is being changed, and receiving a control instruction for controlling a process progress.

The present disclosure provides a cabin space control apparatus, including: a receiving module, configured to receive a control instruction for controlling a seat mode, wherein the seat mode integrates atomic capabilities of different control objects, and has a preset execution manner, and the different control objects comprise at least two seats; and a linkage module, configured to: in response to the control instruction, based on the atomic capabilities of the different control objects, link the at least two seats to perform an action of changing a seat layout in the preset execution manner.

The present disclosure provides an electronic device, including at least one processor, configured to implement the method according to any one of the foregoing embodiments.

The present disclosure provides a computer-readable storage medium having a program stored thereon, where the program, when executed by at least one processor, implements the method according to any one of the above embodiments.

In some embodiments, in the cabin space control method of the present disclosure, a control instruction for controlling a seat mode is received, where the seat mode integrates atomic capabilities of different control objects, and has a preset execution manner, and the different control objects include at least two seats; and in response to the control instruction, based on the atomic capabilities of the different control objects, the at least two seats are linked to perform an action of changing a seat layout in the preset execution manner. In the embodiments of the present disclosure, different seats are linked to perform the action for changing the seat layout, so as to form a corresponding cabin space, so that a requirement for adjusting a plurality of cabin seats can be met, an adjustment range is expanded, and different user requirements are met.

### BRIEF DESCRIPTION OF DRAWINGS

FIG. 1 is a schematic flowchart of a cabin space control method according to an embodiment of the present disclosure.
FIG. 2 is a schematic diagram of a driver reclining/rest mode of the cabin space control method shown in FIG. 1.
FIG. 3 is a schematic diagram of a front passenger reclining/rest mode of the cabin space control method shown in FIG. 1.
FIG. 4 is a schematic diagram of a two-person rest mode of the cabin space control method shown in FIG. 1.
FIG. 5 is a schematic diagram of a camping face-to-face seating mode of the cabin space control method shown in FIG. 1.
FIG. 6 is a schematic diagram of a parent-child rest mode of the cabin space control method shown in FIG. 1.
FIG. 7 is a schematic diagram of a parent-child face-to-face seating mode of the cabin space control method shown in FIG. 1.
FIG. 8 is a schematic diagram of a parent-child front passenger mode of the cabin space control method shown in FIG. 1.
FIG. 9 is a schematic diagram of an in-vehicle large-space mode of vehicle of the cabin space control method shown in FIG. 1.
FIG. 10 is a schematic diagram of a touring large bed mode of the cabin space control method shown in FIG. 1.
FIG. 11 is a schematic diagram of a movie mode of the cabin space control method shown in FIG. 1.
FIG. 12 is a schematic diagram of a parent-child driver mode of the cabin space control method shown in FIG. 1.
FIG. 13 is a schematic diagram of a structure of a cabin space control apparatus according to an embodiment of the present disclosure.
FIG. 14 is a schematic module diagram of an electronic device according to an embodiment of the present disclosure.

### DETAILED DESCRIPTION

Illustrative embodiments, examples of which are illustrated in the accompanying drawings, will be described in detail herein. In the following description with respect to the drawings, like reference numerals in different drawings indicate the same or similar elements, unless otherwise indicated. The embodiments described in the following illustrative embodiments do not represent all embodiments consistent with one or more embodiments of this specification. Rather, they are merely examples of devices and methods consistent with some aspects of one or more embodiments of the present disclosure as detailed in the appended claims.

It should be noted that steps of a corresponding method are not necessarily performed in the order shown and described in this specification in other embodiments. In some other embodiments, the method may include more or fewer steps than those described in this specification. In addition, a single step described in this specification may be decomposed into a plurality of sub-steps for description in other embodiments, and the plurality of steps described in this specification may also be combined into a single step for description in other embodiments.

With the development of vehicle technology, cabin and seat spaces have become a major focus of current research. At present, cabin seats of a vehicle are generally adjusted individually; therefore, how to meet a user's demand for adjustment of multiple seats has become a major research focus. Certainly, the cabin control in the present disclosure may be applied not only to vehicle cabin adjustment, but also to cabin control in other cabins, such as an aircraft cabin, or other tools. In a cabin space control method provided in an embodiment of the present disclosure, a control instruction for controlling a seat mode is received, where the seat mode integrates atomic capabilities of different control objects, the seat mode has a preset execution manner, and the different control objects include at least two seats; and in response to the control instruction, the at least two seats are linked to perform an action of changing a seat layout in the preset execution manner based on the atomic capabilities of the different control objects.

In an embodiment of the present disclosure, different seats are linked to perform an action of changing a seat layout, forming a corresponding cabin space, which can meet the demands for adjusting a plurality of cabin seats, expand an adjustment range, and correspondingly realize the application of a plurality of different changeable cabin space scenes.

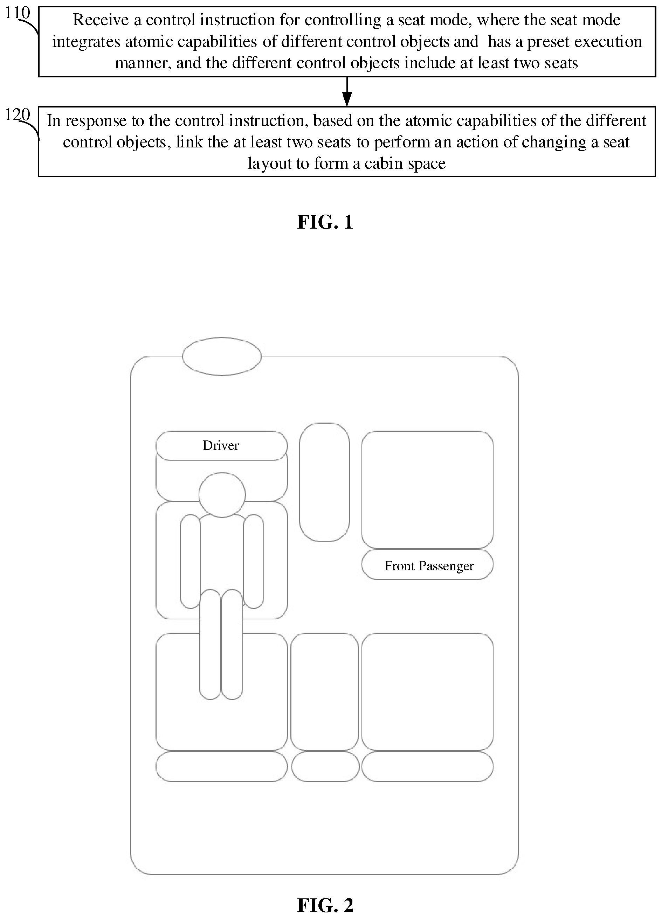

FIG. 1 is a schematic flowchart of a cabin space control method according to an embodiment of the present disclosure, which may include but is not limited to the following steps 110 and 120.

At step 110, a control instruction for controlling a seat mode is received, where the seat mode integrates atomic capabilities of different control objects, the seat mode has a preset execution manner, and the different control objects include at least two seats. These control instructions may originate from at least one of a central stack display (CSD) screen or a voice activation control.

The term "different control objects" indicates that the number of control objects is multiple, i.e., an integer greater than or equal to 2. The different control objects include, for example, at least one of seats or vehicle components associated with the seats. The seat mode described above is used to enable adjustment of the seats and the vehicle components associated with the seats. The vehicle components associated with the seats include, but are not limited to, vehicle windows around the seats, reading lights around the seats, ambient lights around the seats, and other related vehicle components. These related vehicle components may be controlled by the control instructions to achieve a user's expected effect through the seat mode.

The above seat mode integrates atomic capabilities of different control objects. Moreover, atomic capabilities of each of the control objects correspond to preset parameters. These parameters include, but are not limited to, preset basic parameters, and custom parameters for which information is added or deleted by the user. Accordingly, the seat mode is adjusted and edited according to the pre-matched basic parameters and custom parameters, thereby realizing a user's customized demand. For each control object, the atomic capability may be understood as an independent, decomposable, and reusable functional unit of the control object. For example, in the case of a vehicle seat, the atomic capabilities of the seat may include a seat adjustment function (including forward/backward movement, height adjustment, backrest angle adjustment, etc., where each adjustment function may be regarded as an independent atomic capability), a comfort function (e.g., seat heating, ventilation, massage, etc., which may be used individually or in combination to provide a more comfortable experience), and a safety function (e.g., an angle of a seat headrest, a degree of seatbelt pre-tensioning, etc.).

The above basic parameters refer to preset parameters with data, including, for example, at least one of a seat adjustment position or a seat adjustment angle.

The above custom parameters refer to preset parameters with logic conditions, including, for example, at least one of: whether ambient lights of each row of seats are turned on, whether music is played, whether a central control screen is turned off and whether an application is opened, whether a parking comfort function is activated, whether combined headlights are turned on, whether a reading light beside the seat is turned off, or whether a vehicle window beside the seat is closed.

Based on the above pre-configured basic parameters and custom parameters, correspondingly, the above seat mode may include at least one of a seat mode having pre-configured basic parameters for which editing permission is not granted to the user, or a seat mode having pre-configured basic parameters and custom parameters for which editing permission is granted to the user.

However, the above seat mode, in which the editing permission for these parameters is not granted to the user, corresponds to a mode with a relatively high driving safety requirement, for example, a sentry mode.

The above seat mode, in which the editing permission for these parameters is granted to the user, corresponds to an entertainment and/or user comfort mode. The openness degree of the seat mode, in which editing permission of these parameters is granted to the user, may include the adjustment of basic parameters by the user, and may also include the adjustment of addition or deletion of preset custom parameters. This is not limited herein. The seat mode herein is editable to achieve user customization. The above seat mode includes at least one of an adjusted seat mode or a custom seat mode. For detailed descriptions, please refer to the following.

In some embodiments of the above step 110, when the vehicle is parked, in a case where it is determined that an activation condition of the seat mode is satisfied, the control instruction is received. In this way, safety of persons and the vehicle when the seat mode is applied can be ensured.

At step 120, in response to the control instruction, based on the atomic capabilities of the different control objects, the at least two seats are linked to perform an action of changing a seat layout in the preset execution manner. Changing the seat layout of different seats can form different cabin spaces. The cabin space is pre-configured according to different seat layouts of the seat modes.

The preset execution manner of the above seat mode defines a process to be executed for moving a seat from an initial position to a target position. The preset execution manner of the above seat mode may include, but is not limited to, at least one of an execution sequence or an execution degree. Thus, the seat can move from the initial position to the target position, to satisfy the user's needs. The initial position includes a default initial position and a set initial position. For detailed descriptions, please refer to the following.

The above execution sequence may include, but is not limited to, a sequence of seat linkage adjustment. The sequence of the seat linkage adjustment includes, but is not limited to, when the seat mode is a driver reclining/rest mode, adjusting the rear row seat first, and then adjusting the front row seat. The sequence of the seat linkage adjustment includes, but is not limited to, in the above driver reclining/rest mode, adjusting the front row seat to a middle position first, then adjusting the rear row seat, and then adjusting the front row seat again. A specific execution sequence can be preset according to user's needs, and is not limited herein.

The above execution degree may include, but is not limited to, at least one of an execution orientation or an execution posture during the transition of the seat position from the initial position to the target position. The execution orientation may include, but is not limited to, at least one of an execution position, an execution angle, or an execution height during the transition from the initial position to the target position.

The seats in the embodiments of the present disclosure may include a plurality of rows of seats, for example, two rows of seats, three rows of seats, and N rows of seats. N is a positive integer greater than 3. In some examples, when there are relatively many middle seats, the backrest of the middle seat is rotated to be parallel to the vehicle door, and the seat faces the interior of the vehicle. In this way, a large interior space mode of vehicle can be achieved.

In the embodiments of the present disclosure, the seat mode integrates the atomic capabilities of different control objects, and different seats are linked to perform the action of changing the seat layout in the preset execution manner. In this way, different seats can be controlled through linkage, thereby changing the cabin space, satisfying the user's need for using different cabin space, and thus improving an experience effect of the user.

With reference to FIG. 1, the above step 120 uses pre-set logic for different control objects, and the logic includes the atomic capabilities and the control execution sequence. Thus, according to the atomic capabilities of different control objects, different seats can be linked to perform the action for changing the seat layout, and vehicle components associated with the seats perform corresponding actions, thereby realizing different seat modes.

The step 120 in the embodiments of the present disclosure may be implemented by the following plurality of steps.

In a first embodiment, the above step 120 may include the following two steps.

At the first step, in response to the control instruction, it is determined whether a starting condition of the seat mode is satisfied.

In the above first step, a driving state of the vehicle, an environment dataset of a cabin interior environment, a usage state of each seat, and a usage state of a center armrest may be obtained first; and then it is determined whether the starting condition of the seat mode is satisfied, based on the driving state, the environment dataset, the usage state of the seat, and the usage state of the center armrest.

The driving state of the vehicle is used to indicate whether the vehicle is in a parked state. The usage state of the seat is used to indicate whether the seat is in normal use. The usage state of the center armrest is used to indicate whether the center armrest is in normal use. The environment dataset of the cabin interior environment is used to indicate whether there is reserved space in the cabin interior environment that facilitates movement control of the seat.

The starting of the seat mode requires that the atomic capabilities of the control objects of the seat mode are functional. When the starting condition of the seat mode is satisfied, the seat mode is started. In some embodiments, the starting condition of the seat mode is determined to be satisfied when: the driving state of the vehicle is the parked state, the usage state of the seat is in a normal operating state and the seat is not occupied (e.g., free of passengers or objects), the usage state of the center armrest is in a normal operating state and the center armrest is not in use (e.g., no charging line is being plugged or unplugged, or no cup is being handled), and the environment dataset of the cabin interior environment indicates that there are no obstacles or barriers around the seat and there is reserved space.

When the starting condition of the seat mode is not satisfied, the seat mode cannot be started. In some embodiments, it is determined that the starting condition of the seat mode is not satisfied, when at least one of the following conditions is satisfied: the driving state of the vehicle is a running state; the usage state of the seat is abnormal or the seat is occupied (e.g., a person is seated and/or an object is placed); the usage state of the center armrest is abnormal or in use (e.g., a charging line is being plugged or unplugged or a cup is being handled); or the environment dataset of the cabin interior environment indicates that there are obstacles or barriers around the seat and there is no reserved space.

When the starting condition of the seat mode is not satisfied, corresponding prompt information is generated to notify the user. Thus, by providing feedback to the user, the user is allowed to provide assistance to complete use of the seat mode.

At the second step, in the case where the starting condition of the seat mode is satisfied, based on the atomic capabilities of different control objects, different seats are linked to execute the action of changing the seat layout in the preset execution manner. The starting condition for the seat is, for example, that the seat is unoccupied or the seat has no fault. In this way, in the case where different seats all satisfy the availability condition, the effectiveness of subsequent execution actions of the linked seat is ensured, and a situation where multiple control failures occur due to the seat faults is avoided.

In a second embodiment, the above step 120 may further include: when the vehicle is in the parked state, determining that the activation condition of the seat mode is satisfied, and receiving a control instruction; and determining whether the starting condition of the seat mode is satisfied based on the environment dataset, the usage state of the seat and the usage state of the center armrest. In this way, the seat mode can be activated when the vehicle is in the parked state, thereby avoiding a personal safety hazard caused by using the seat mode during driving, and then it is determined whether the starting condition of the seat mode is satisfied, thereby improving reliability of seat linkage.

In a third embodiment, the seat mode is a current seat mode. Accordingly, the above step 120 may further include the following three steps: first step, in response to the control instruction, taking a seat position at the end of a previous seat mode as an initial position for the current seat mode; second step, determining difference data between the initial position for the current seat mode and a target position for the current seat mode; and third step, based on atomic capabilities corresponding to the difference data, linking different seats to execute the action of changing the seat layout in the preset execution manner. In this way, the previous seat mode does not need to be restored to the default initial position again; instead, the adjustment starts from the end position for the previous seat mode until the target position is reached, which can reduce the time for restoring from the initial position to the default initial position and improve the adjustment efficiency.

In a fourth embodiment, the above step 120 may further include: in response to the control instruction, based on the atomic capabilities corresponding to the difference data, linking at least two seats to execute an action of changing a seat layout in a preset execution manner, and adjusting from the initial position for the current seat mode to the target position for the current seat mode. The initial position for the current seat mode is the default initial position, that is, the position is restored to the default initial position at the end of the previous seat mode (which may also be referred to as seat reset).

A specific implementation of a seat mode resetting process is as follows:
<1>: A seat mode reset function is enabled when the vehicle is in a P gear (Park gear) (when the seat mode is adjusted, a front passenger seat has to be unoccupied), and no objects should be stacked around the seat. After clicking the reset function separately, a seat mode that is interrupted does not display a recovery option.
<2> Seat state when the seat reset is completed:
   <2.1> Second row seats: a seat backrest and a front-rear position are reset to designed positions; a leg rest remains in its current state;
   <2.2> Driver seat: a backrest, a seat cushion, a lumbar support, a rotation position, and a front-rear position of the driver seat are reset to default initial positions, such as a driving position;
   <2.3> Front passenger seat: a backrest, a seat cushion, a lumbar support, a rotation position, and a front-rear position of the front passenger seat are reset to default initial positions;
   <2.4> Center armrest: a front-rear position is reset to a default initial position. As such, the adjustment can be performed from the default initial position for each seat mode every time.

In a fifth embodiment, the above atomic capabilities include trigger conditions, triggers, and executed actions. Categories of the action trigger conditions of the atomic capabilities include a vehicle category, a vehicle door category, a vehicle window category, an occupant category, an environment category, a time category, a charging/discharging category, and a navigation category. For example, the action trigger conditions include, for example, turning on a vehicle key and opening a vehicle door; the trigger detects whether there is a vehicle door open signal and a vehicle key turn-on signal; and the executed actions include, for example, turning on a screen, turning on an air conditioner to a preset temperature, and turning on a fragrance system to a preset level. In this way, functions of some specified items are triggered.

Accordingly, the parameters for the seat mode include basic parameters and custom parameters; and the above step 110 may further include receiving a control instruction for controlling the adjusted seat mode. The above step 120 may further include: obtaining, based on an atomic capability corresponding to a parameter for the adjusted seat mode, a trigger signal detected by a trigger of a corresponding atomic capability, where the atomic capability corresponding to the parameter for the adjusted seat mode includes at least one of an atomic capability corresponding to an adjusted basic parameter or an atomic capability corresponding to an adjusted custom parameter; and when the trigger signal satisfies a trigger condition, linking different seats to execute an action of changing a seat layout in the preset execution manner. In this way, the accuracy and reliability of adjusting different seats are ensured.

The above method further includes: obtaining an adjusted seat mode by the following steps (1) to (3).

At step (1), an adjustment instruction for adjusting a parameter for the seat mode is received.

The seat modes may include a seat mode having entertainment properties and/or affecting user comfort, for example, a movie mode.

The above adjustment instruction includes a specific object to be adjusted, such as, a seat angle, an audio system, an ambient light, etc. The specific object to be adjusted includes adjustment of basic parameters and adjustment of custom parameters, for example, adding information to and/or deleting information from the custom parameters. There may be one or more specific objects, and the specific objects are related to the received adjustment instruction. By parsing the adjustment instruction, the specific object to be adjusted is parsed, to determine subsequently steps to be specifically executed, which is not limited herein.

At step (2), based on the adjustment instruction, the basic parameter is adjusted to generate an adjusted basic parameter, and/or based on the adjustment instruction, the custom parameter is adjusted to generate an adjusted custom parameter.

The above basic parameter data is used to realize setting of a default position for the seat mode.

At step (3), an adjusted seat mode is generated according to at least one of an atomic capability corresponding to the adjusted basic parameter or an atomic capability corresponding to the adjusted custom parameter.

In this embodiment of the present disclosure, the seat mode is customized and edited by the user, and different seats are linked to perform an action of changing the seat layout in the set execution manner, thereby realizing a personalized requirement of the user. By adjusting the basic parameters, the user's differentiated comfort requirements, such as sitting posture/lying posture of the user, are satisfied, and the seat mode, generated from user fine-tuning of the basic parameters and/or custom parameters, is added.

In some examples, whether an adjustment operation in the adjustment instruction conforms to the specification is checked, and when the adjustment operation conforms to the specification, the basic parameter is adjusted according to the adjustment operation to generate the adjusted basic parameter. The adjustment operation herein includes increasing a value of the basic parameter data and/or decreasing the value of the basic parameter data. When the adjustment operation does not conform to the specification, adjustment of the basic parameter data is rejected, and an original state is maintained. In this way, the adjustment operation conforms to the specification, which ensures the effectiveness of the adjustment of the adjusted seat mode and the safety of the subsequent use of the seat mode.

The above specification refers to a preset specification for ensuring use safety. For example, the specification may include but is not limited to an adjustable range of basic parameter data, and as shown below, the content in brackets [ ] indicates the adjustable range of the seat mode. The maximum adjustable value within the adjustable range is referred to as a preset movable position. The preset movable position includes, for example, at least one of a maximum movable distance, a maximum movable length, or a maximum rotatable angle.

The above preset movable position may be realized by a slide rail or track. Accordingly, by adopting the slide rail form, it is more suitable for the use scenario of the entire vehicle, and the user experience is greatly improved.

In some examples, the preset movable position may be, but is not limited to, a long strip position. One end of the long strip position may be a default initial position for the seat mode, and a corresponding position of the seat finally reached in the seat mode is a target position. 10% of the long strip position refers to occupying 10% of the entire long strip position starting from the initial position. The initial position of the above preset movable position may be, but is not limited to, a position where the seat faces the front of the vehicle.

The seat modes shown in FIG. 2 to FIG. 12 may include, but are not limited to, at least one of: ① a driver reclining/rest mode, ② a front passenger reclining/rest mode, ③ a two-person rest mode, ④ a camping face-to-face seating mode, ⑤ a parent-child rest mode, ⑥ a parent-child face-to-face seating mode, ⑦ a parent-child front passenger mode, ⑧ an in-vehicle large-space mode, ⑨ a touring large bed mode, ⑩ a movie mode, or ⑪ a parent-child driver mode. Accordingly, there are many intelligent scenarios of the cabin seats of the vehicle, which satisfy the personalized scenario requirements of user for the cabin seats. For detailed descriptions, please refer to the following.

FIG. 2 is a schematic diagram of a driver reclining/rest mode. The preset execution manner of ① the driver reclining/rest mode (the main execution actions include reclining the driver seat until it is substantially flat) is as follows:
First step: the second row seats execute the following preset actions (completing each action in the following sequence);
Second row left seat:
   1. adjusting a seat backrest angle to a preset movable position of 115 ° [103°≤ Cal. (Calibration) ≤ 123°]
   2. retracting a seat leg rest to a preset movable position of 0% [0% ≤ Cal. ≤ 5%]
   3. sliding the seat to a preset movable position of 6% [0% ≤ Cal. < 9%]
Second row right seat: no default value [no limitation]
Second step: the front row seats and the center armrest execute the following preset actions (the front row seats and the center armrest (console) start to complete each action in the following sequence simultaneously);
Driver seat:
   1. adjusting a seat backrest angle to a preset movable position of 135°;
   2. sliding the seat to a preset movable position of 48%;
   3. lifting the seat to a preset movable position of 50%;
   4. rotating the seat by 180 degrees;
Front passenger seat: no default value [no limitation]
Center armrest:
   1. sliding to a preset movable position of 80% [no limitation]

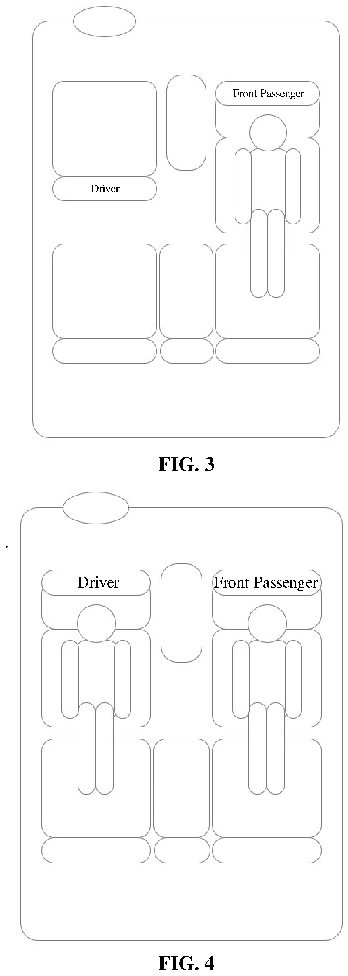

FIG. 3 is a schematic diagram of a front passenger reclining/rest mode. As shown in FIG. 3, the preset execution manner of ② the front passenger reclining/rest mode (main execution actions include reclining the front passenger seat until it is substantially flat) is as follows:
First step: the second row seats execute the following preset actions (completing each action in the following sequence);
Second row left seat: no default value [no limitation]
Second row right seat:
   1. adjusting a seat backrest angle to a preset movable position of 115 ° [103°≤ Cal. ≤ 123°]
   2. retracting a seat leg rest to a preset movable position of 0% [0% ≤ Cal. ≤ 5%]
   3. sliding the seat to a preset movable position of 6% [0% ≤ Cal. < 9%]
Second step: the front row seats and the center armrest execute the following preset actions (the front row seats and the center armrest start to complete each action in the following sequence simultaneously);
Driver seat: no default value [no limitation]
Front passenger seat:
   1. adjusting a seat backrest angle to a preset movable position of 150°;
   2. sliding the seat to a preset movable position of 48%;
   3. lifting the seat to a preset movable position of 50%;
   4. rotating the seat by 180 degrees;
Center armrest:
   1. sliding to a preset movable position of 80% [no limitation]

FIG. 4 is a schematic diagram of a two-person rest mode. The preset execution manner of ③ the two-person rest mode (the main execution actions include reclining the driver seat and the front passenger seat until they are substantially flat) is as follows:
First step: the second row seats execute the following preset actions (completing each action in the following sequence);
Second row left seat:
   1. adjusting a seat backrest angle to a preset movable position of 115 ° [103°≤ Cal. ≤ 123°]
   2. retracting a seat leg rest to a preset movable position of 0% [0% ≤ Cal. ≤ 5%]
   3. sliding the seat to a preset movable position of 6% [0% ≤ Cal. < 9%]
Second row right seat:
   1. adjusting a seat backrest angle to a preset movable position of 115 ° [103°≤ Cal. ≤ 123°]
   2. retracting a seat leg rest to a preset movable position of 0% [0% ≤ Cal. ≤ 5%]
   3. sliding the seat to a preset movable position of 6% [0% ≤ Cal. < 9%]
Second step: the front row seats and the center armrest execute the following preset actions (the front row seats and the center armrest start to complete each action in the following sequence simultaneously);
Driver seat:
   1. adjusting a seat backrest angle to a preset movable position of 135°;
   2. sliding the seat to a preset movable position of 48%;
   3. lifting the seat to a preset movable position of 50%;
   4. rotating the seat by 180 degrees;
Front passenger seat:
   1. adjusting a seat backrest angle to a preset movable position of 150°;
   2. sliding the seat to a preset movable position of 48%;
   3. lifting the seat to a preset movable position of 50%;
   4. rotating the seat by 180 degrees;
Center armrest:
   1. sliding to a preset movable position of 0% [no limitation]

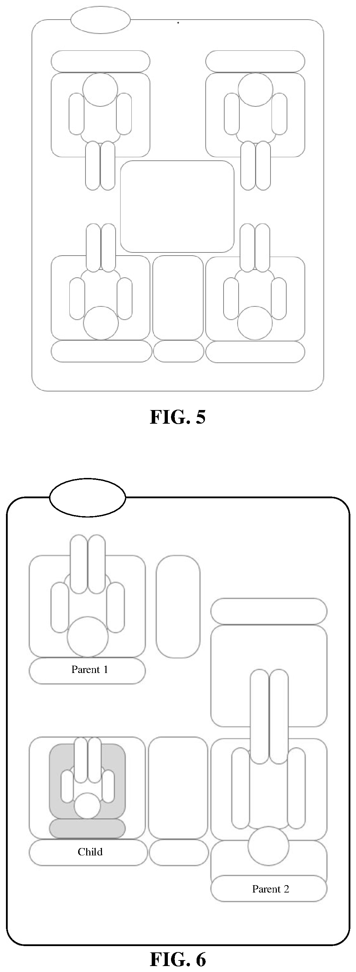

FIG. 5 is a schematic diagram of a camping face-to-face seating mode. The preset execution manner of ④ the camping face-to-face seating mode (the main execution actions include reclining both the driver seat and the front passenger seat) is as follows:
First step: the second row seats execute the following preset actions (completing each action in the following sequence);
Second row left seat:
   1. adjusting a seat backrest angle to a preset movable position of 113 ° [103°≤ Cal. ≤ 123°]
   2. retracting a seat leg rest to a preset movable position of 0% [0% ≤ Cal. ≤ 5%]
   3. sliding the seat to a preset movable position of 0% [0% ≤ Cal. < 9%]
Second row right seat:
   1. adjusting a seat backrest angle to a preset movable position of 113 ° [103°≤ Cal. ≤ 123°]
   2. retracting a seat leg rest to a preset movable position of 0% [0% ≤ Cal. ≤ 5%]
   3. sliding the seat to a preset movable position of 0% [0% ≤ Cal. < 9%]
Second step: the front row seats and the center armrest execute the following preset actions (the front row seats and the center armrest start to complete each action in the following sequence simultaneously);
Driver seat:
   1. adjusting a seat backrest angle to a preset movable position of 110 ° [110°≤ Cal. ≤ 116°].
   2. sliding the seat to a preset movable position of 70%.
   3. lifting the seat to a preset movable position of 50%.
   4. rotating the seat by 180 degrees.
Front passenger seat:
   1. adjusting a seat backrest angle to a preset movable position of 110 ° [110°≤ Cal. ≤ 116°].
   2. sliding the seat to a preset movable position of 70%.
   3. lifting the seat to a preset movable position of 50%.
   4. rotating the seat by 180 degrees.
Center armrest:
   1. sliding to a preset movable position of 100% [no limitation]

FIG. 6 is a schematic diagram of a parent-child rest mode. The preset execution manner of ⑤ the parent-child rest mode (the main execution actions include sliding the front passenger seat rearward and reclining the front passenger seat) is as follows:
First step: the second row seats execute the following preset actions (completing each action in the following sequence);
Second row left seat: no default value [no limitation]
Second row right seat:
   1. adjusting a seat backrest angle to a preset movable position of 115 ° [103°≤ Cal. ≤ 123°]
   2. retracting a seat leg rest to a preset movable position of 0% [0% ≤ Cal. ≤ 5%]
   3. sliding the seat to a preset movable position of 6% [0% ≤ Cal. < 9%]
Second step: the front row seats and the center armrest execute the following preset actions (the front row seats and the center armrest start to complete each action in the following sequence simultaneously);
Driver seat: no default value [no limitation]
Front passenger seat:
   1. adjusting a seat backrest angle to a preset movable position of 150°;
   2. sliding the seat to a preset movable position of 48%;
   3. lifting the seat to a preset movable position of 50%;
   4. rotating the seat by 180 degrees;
Center armrest:
   1. sliding to a preset movable position of 50% [no limitation]

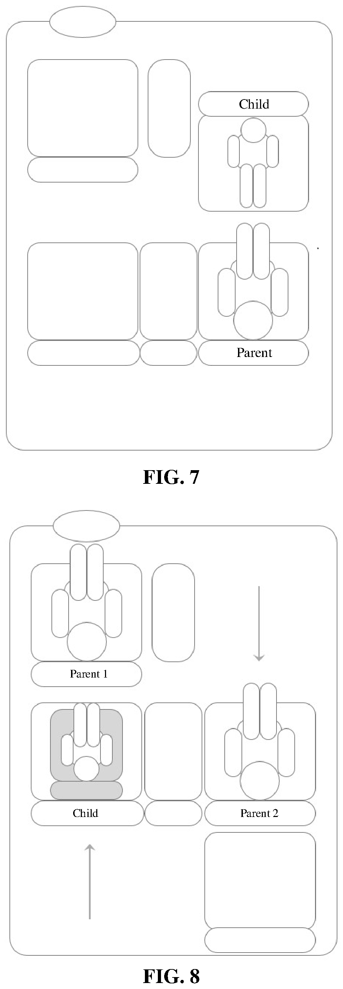

FIG. 7 is a schematic diagram of a parent-child face-to-face seating mode. The preset execution manner of ⑥ the parent-child face-to-face seating mode (the main execution actions include: reclining the front passenger seat, and sliding the second-row right seat forward; or reclining the front passenger seat and sliding the front passenger seat rearward, and maintaining the second row right seat stationary) is as follows:
First step: the second row seats execute the following preset actions (completing each action in the following sequence);
Second row left seat: no default value [no limitation]
Second row right seat:
   1. adjusting a seat backrest angle to a preset movable position of 115 ° [103°≤ Cal. ≤ 123°]
   2. retracting a seat leg rest to a preset movable position of 0% [0% ≤ Cal. ≤ 5%]
   3. sliding the seat to a preset movable position of 0% [0% ≤ Cal. < 3%]
Second step: the front row seats and the center armrest execute the following preset actions (the front row seats and the center armrest start to complete each action in the following sequence simultaneously);
Driver seat: no default value [no limitation]
Front passenger seat:
   1. adjusting a seat backrest angle to a preset movable position of 110 ° [110°≤ Cal. ≤ 116°]
   2. sliding the seat to a preset movable position of 55% [≥ 53%]
   3. lifting the seat to a preset movable position of 50% [50% ≤ Cal. ≤ 53%]
   4. rotating the seat by 180 degrees;
Center armrest:
   1. sliding to a preset movable position of 50% [no limitation]

FIG. 8 is a schematic diagram of a parent-child front passenger mode. The preset execution manner of ⑦ the parent-child front passenger mode (the main execution actions include sliding the front passenger seat rearward and sliding the second row left seat forward) is as follows:
First step: the second row seats execute the following preset actions (completing each action in the following sequence);
Second row left seat:
   1. adjusting a seat backrest angle to a preset movable position of 115 ° [103°≤ Cal. ≤ 123°]
   2. retracting a seat leg rest to a preset movable position of 0% [0% ≤ Cal. ≤ 3%]
   3. sliding the seat to a preset movable position of 33.7% [0-33.7%]
Second row right seat:
   1. adjusting a seat backrest angle to a preset movable position of 115 ° [103°≤ Cal. ≤ 123°]
   2. retracting a seat leg rest to a preset movable position of 0% [0% ≤ Cal. ≤ 3%]
   3. sliding the seat to a preset movable position of 0% [0% ≤ Cal. ≤ 9%]
Second step: the front row seats and the center armrest execute the following preset actions (the front row seats and the center armrest start to complete each action in the following sequence simultaneously);
Driver seat: no default value [no limitation]
Front passenger seat:
   1. adjusting a seat backrest angle to a preset movable position of 110 ° [100°≤ Cal. ≤ 120°].
   2. sliding the seat to a preset movable position of 45% [≥ 43%].
   3. lifting the seat to a preset movable position of 31% [29% ≤ Cal. ≤ 33%].
Center armrest:
   1. sliding to a preset movable position of 0% [no limitation]

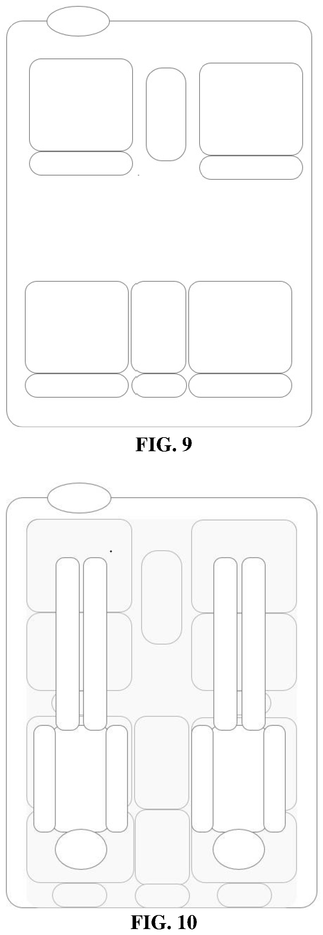

FIG. 9 is a schematic diagram of an in-vehicle large-space mode. The preset execution manner of ⑧ the in-vehicle large-space mode (the main execution actions include sliding the driver seat and the front passenger seat forward) is as follows:
First step: the second row seats execute the following preset actions (completing each action in the following sequence);
Second row left seat:
   1. adjusting a seat backrest angle to a preset movable position of 115 ° [103°≤ Cal. ≤ 123°]
   2. retracting a seat leg rest to a preset movable position of 0% [0% ≤ Cal. < 3%].
   3. sliding the seat to a preset movable position of 0% [0% ≤ Cal. < 9%].
Second row right seat:
   1. adjusting a seat backrest angle to a preset movable position of 115 ° [103°≤ Cal. ≤ 123°]
   2. retracting a seat leg rest to a preset movable position of 0% [0% ≤ Cal. ≤3%].
   3. sliding the seat to a preset movable position of 0% [0% ≤ Cal. < 9%].
Second step: the front row seats and the center armrest execute the following preset actions (the front row seats and the center armrest start to complete each action in the following sequence simultaneously);
Driver seat:
   1. adjusting a seat backrest angle to a preset movable position of 78° [78°≤ Cal. ≤ 180°].
   2. sliding the seat to a preset movable position of 100% [≥ 95%].
   3. lifting the seat to a preset movable position of 31% [0°≤ Cal. ≤ 100%].
Front passenger seat:
   1. adjusting a seat backrest angle to a preset movable position of 78°[78°≤ Cal. ≤ 180°].
   2. sliding the seat to a preset movable position of 100% [≥ 95%].
   3. lifting the seat to a preset movable position of 31% [0°≤ Cal. ≤ 100%].
Center armrest:
   1. sliding to a preset movable position of 0% [no limitation]

FIG. 10 is a schematic diagram of a touring large bed mode. The preset execution manner of ⑨ the touring large bed mode (the main execution actions include: sliding both the driver seat and the front passenger seat forward, and reclining them until they are substantially flat; and sliding both the second row left seat and the second row right seat forward until they are substantially flat) is as follows:
1. the driver seat and the front passenger seat slide forward by 300 mm and the rear row seats slide forward by 220 mm, with a total execution time of 3.5 seconds;
2. the backrests of the driver seat and the front passenger seat recline by 70°, and the rear row seats recline by 65°, with a total execution time of 23 seconds.

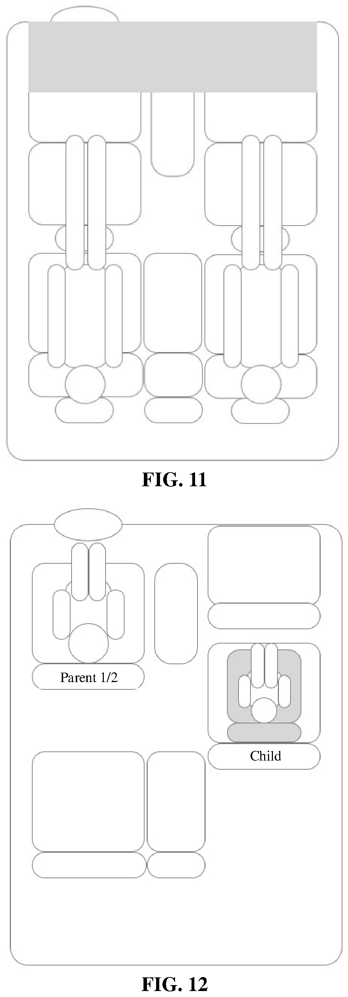

FIG. 11 is a schematic diagram of a movie mode. The preset execution manner of ⑩ the movie mode (the main execution actions include: sliding both the driver seat and the front passenger seat forward, reclining them until they are substantially flat, lowering their heights; sliding both the second row left seat and the second row right seat forward until they are substantially flat, and lowering their heights; and turning on the movie device) is as follows:
1. the driver seat and the front passenger seat slide forward by 150 mm, with a total execution time of 2 seconds;
2. the driver seat and the front passenger seat are lowered to their lowest positions, and their backrests recline by 70° to a fully reclined position, with a total execution time of 23 seconds.

FIG. 12 is a schematic diagram of a parent-child driver mode. The preset execution manner of ⑪ the parent-child driver mode (the main execution actions include sliding the front passenger seat forward and sliding the second row right seat forward) is as follows:
1. the front passenger seat slides forward by 250 mm, the backrest of the front passenger seat tilts forward by 10°, with a total execution time of 3 seconds; 2. the quarter seat slides forward by 650 mm, with a total execution time of 7 seconds. The front passenger seat and rear row seat can move simultaneously, with a total execution time of 7 seconds.

In some embodiments, the cabin space control method further includes the following three steps.

At the first step, a generation instruction for generating a custom seat mode is received.

The above generation instruction may include adding information to and/or deleting information from custom parameters related to the custom seat mode so as to generate the custom seat mode.

At the second step, the custom parameter for the custom seat mode is displayed.

The above custom parameters are used to implement the setting of the positions of the custom vehicle components. The custom parameter is empty by default, the position of the custom vehicle component can be newly added, saved and overwritten before or after the operation of the seat mode, and the name of the custom vehicle component position cannot be edited. After information is added to the custom parameter, information can be further added to or deleted from the custom parameter subsequently.

At the third step, input information for the custom parameter is received to obtain custom parameter information.

The above input information may include a logical judgment result, such as a logical judgment result of confirming "Yes" or confirming "No". However, the custom parameter herein may be a parameter within a specified custom parameter range.

The cabin space control method for the seat mode according to the embodiments of the present disclosure further includes: when the custom parameter information is saved or overwritten, determining whether the current seat mode conflicts with a position of the center armrest (e.g., whether the position of the center armrest falls within a limited range of the seat mode). If there is no conflict, the current seat mode and the position of the center armrest are directly saved based on the current position; and if there is a conflict, saving operation fails. A prompt is provided to the user to indicate whether the saving operation succeeds or fails.

At the fourth step, a custom seat mode is generated based on atomic capabilities corresponding to the custom parameter information. The activation mode of the above custom seat mode satisfies at least the activation condition when switching into the custom seat mode.

In an embodiment of the present disclosure, the user may customize the seat mode within a specified custom parameter range, thereby greatly improving user's autonomy and improving the user experience. Accordingly, the present disclosure facilitates both the customization and adjustment of the seat mode, while ensuring the reliability, effectiveness and safety of the custom seat mode by keeping it within the specified custom parameter range.

In some embodiments, the above method further includes: during a process of linking different seats to execute actions of changing the seat layout in the preset execution manner, displaying prompt information for prompting that the seat mode is being changed, and receiving a control instruction for controlling a process progress (e.g., at least one of a control instruction for pausing the process progress, a control instruction for resuming the process progress, or a control instruction for continuing the process progress). Accordingly, the user can master and control the different progress stages of seat adjustment.

An execution procedure of the cabin space control method in the embodiments of the present disclosure in actual application is as follows:
Entering the CSD screen function:
① After the user switches to a preset seat mode, a preview effect of seat rotation is demonstrated based on the difference between current rotation angles of the driver and front passenger seats and their rotation angles in a target scene.
② When the vehicle is in a non-P (Park) gear, a main page prompts the user to switch to the P gear in a safe environment and then activate the seat mode.

When the seat fails, the page prompts the user that the seat fails and the function of the seat mode is unavailable.

The user selects a certain seat mode, and clicks to start, and the starting condition of the seat mode is determined (the current gear is in the P gear, there is no object placed around the front row seats and the instrument panel, and there is no object placed in the front of the second row seats). If it is determined that the starting condition of the seat mode is satisfied, the seat mode can be successfully operated, and a picture tutorial pop-up window of operation steps appears (no secondary confirmation pop-up window is triggered by a hard switch). After the user confirms the start, the process enters a waiting-for-start stage.

③ Waiting-for-start stage: when the condition for starting the seat mode is satisfied, the seat starts to move after a 1-second countdown of the seat (calibrated by a seat subsystem).

When the difference between the rotation angles of the driver and front passenger seats and the rotation angles in the target scene is within 10°, and the seat identification controller inherent in the vehicle determines that there is no occupancy signal, the seat can directly enter the 1-second countdown after clicking to start. The occupancy signal is used to indicate that a person is sitting on and/or an item is placed on the seat.

If it is determined that the seat is occupied but there is no person on the seat, the seat can directly enter the 1-second countdown after clicking to start; when the starting condition of the seat mode is not satisfied (depending on the difference between the rotation angles of the driver and front passenger seats and the seat angles in the target scene, and the occupancy situation), for example, when the difference between the rotation angles of the driver and front passenger seats and the rotation angles in the target scene is greater than 10°, and the seat identification controller inherent in the vehicle determines the occupancy signal, operations a to d are specifically included.

In the operation a, a prompt is provided to the user indicating that "a passenger on a certain seat should vacate the seat as soon as possible, and the function will automatically exit if a timeout occurs", and the user is required to leave the seat and the prompt is delivered via any prompting method such as a visual display or an audio output.

In the operation b, the seat subsystem determines whether there is an occupancy signal currently; and when there is no occupancy signal within 7 seconds, the seat begins to move after a 1-second internal countdown.

In the operation c, after clicking to confirm the start, if an occupancy signal is still detected before the time limit expires, the current seat mode is directly exited, and the user is prompted that a timeout has occurred and the XX mode has been exited.

The operation d involves instructions for abnormal operations.

During a waiting-for-start period, if the user continues to adjust the basic position of the seat through voice or a hard button, the current seat mode is directly exited, and the user is prompted.

During the waiting-for-start period, if the user switches to another seat mode, the current seat mode is directly exited to transition to the corresponding seat mode, and the user is prompted.

During the waiting-for-start period, if the user switches away from the seat mode page on the CSD screen, the current seat mode is directly exited, and the user is prompted.

During the waiting-for-start period, if the gear is shifted out of the P gear, the current seat mode is directly exited, and the user is prompted that the gear condition is not satisfied.

④ Function activation: during the process of seat movement, the user is prompted that the seat is in transition, and can switch to "Pause" or "Seat Reset", which includes the steps (4.1) to (4.4).

At step (4.1), upon receiving a control instruction input by the user for pausing the process progress, the seat movement is paused, and the screen displays a "Resume" or "Continue" option.

At step (4.2), upon receiving a control instruction input by the user for resuming the process progress, the "Seat Reset" function is invoked.

At step (4.3), upon receiving a control instruction input by the user for continuing the process progress, the current starting condition is re-evaluated, and the seat identification controller proceeds with seat movement after the waiting-for-start stage ends.

The step (4.4) involves instructions for abnormal operations.

During the function start period, when a seat stall signal sent by the seat identification controller is received, the user is prompted that the seat mode is paused, notified of the obstacle status, and requested to clear obstacles around the seat, before the seat mode can be restarted.

During the function start period, when the difference between the current rotation angle of the driver seat and the seat rotation angle of the target scene exceeds 10°, and the seat identification controller detects the occupancy signal again, the user is prompted that the current seat mode is paused.

During the function start period, when the gear is switched from the P gear to a non-P gear, the user is prompted that the current seat mode is paused.

During the function start period, when an operation, such as adjusting the seat position via voice or a hard switch, etc., is detected, the user is prompted that the current seat mode is paused.

### ⑤ Start Completion Stage:

After the seat mode start is completed, the user is reminded that the current seat mode switching is completed.

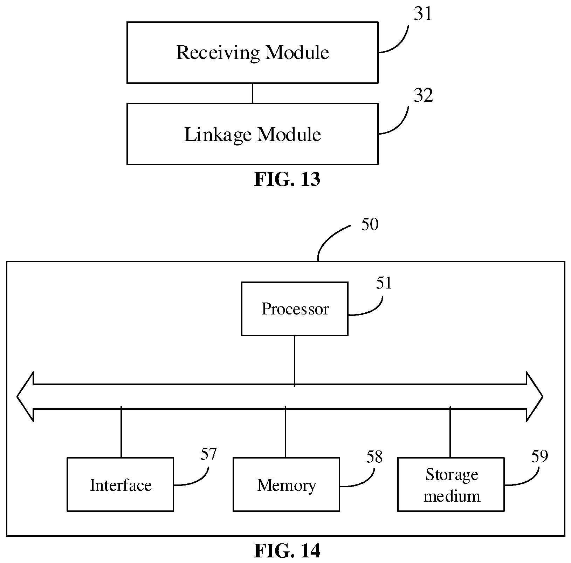

Based on a same application concept as the foregoing method, an embodiment of the present disclosure further provides a cabin space control apparatus, and FIG. 13 is a schematic structural diagram of a cabin space control apparatus according to an embodiment of the present disclosure. The cabin space control apparatus includes: a receiving module 31, configured to receive a control instruction for controlling a seat mode, where the seat mode integrates atomic capabilities of different control objects and has a preset execution manner, and the different control objects include at least two seats; and a linkage module 32, configured to: in response to the control instruction, link the at least two seats based on the atomic capabilities of the different control objects, to execute an action of changing a seat layout in the preset execution manner.

In some embodiments, the electronic device includes the cabin space control apparatus described above.

For the implementation process of the functions and effects of respective modules in the above apparatus, reference may be made to the implementation process of the corresponding steps in the above method, and the same technical effects can be achieved, which will not be repeated here.

The cabin space control method of the embodiments of the present disclosure is applied to an electronic device. The electronic device may include, but is not limited to, a vehicle-mounted terminal connected to the vehicle. The vehicle-mounted terminal connected to the vehicle may be, but is not limited to, a vehicle body controller and a seat identification controller.

FIG. 14 is a schematic module diagram of an electronic device according to an embodiment of the present disclosure.

As shown in FIG. 14, the electronic device 50 includes at least one processor 51, configured to implement the cabin space control method described above.

In some embodiments, the electronic device 50 may include at least one storage medium 59. For example, a computer-readable storage medium may store a program that can be invoked by the at least one processor 51, and may include a non-volatile storage medium. In some embodiments, the electronic device 50 may include at least one memory 58 and at least one interface 57. In some embodiments, the electronic device 50 may further include other hardware according to actual applications.

The computer-readable storage medium according to the embodiment of the present disclosure stores a program, and when the program is executed by the at least one processor 51, the cabin space control method described above is implemented.

The present disclosure may be implemented in a form of a computer program product implemented on one or more computer-readable storage media (including but not limited to a magnetic disk storage, a CD- ROM, an optical storage, etc.) that include program code. The computer-readable storage medium includes permanent or non-permanent, or removable or non-removable medium, and information storage may be implemented by any method or technology. The information may be a computer-readable instruction, a data structure, a program module, or other data. Examples of computer-readable storage media include, but are not limited to, a phase change random access memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a compact disc read-only memory (CD-ROM), a digital versatile disc (DVD) or other optical memory, a magnetic cassette, a magnetic tape, a magnetic disk storage or other magnetic storage devices, or any other non-transitory media, which can be used to store information that can be accessed by a computing device.

In the description of the present disclosure, it should be understood that the orientation or positional relationships indicated by terms, such as "middle", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like, are based on the orientation or positional relationships shown in the drawings, and are merely for the convenience of describing the present disclosure and simplifying the description, rather than indicating or implying that the referred device or element must have a particular orientation, be constructed and operated in a particular orientation, and therefore cannot be construed as limiting the present disclosure.

In the description of the present disclosure, it should be understood that the terms "first", "second", and the like, are merely used for descriptive purposes, and cannot be understood as indicating or implying relative importance or implicitly indicating the number of indicated technical features. Therefore, features defined with "first", "second", etc. may explicitly or implicitly include at least one of such features. In the description of the present disclosure, "a plurality of" means at least two, such as two, three, etc., unless otherwise specifically defined.

In the present disclosure, unless otherwise expressly specified and limited, the terms "mounted", "coupled", "connected", "fixed", and the like, should be understood in a broad sense. These terms may refer to, for example, a fixed connection, a detachable connection, or an integral connection, may refer to a mechanical connection or an electrical connection, may refer to a direct connection or an indirect connection through an intervening medium, or may refer to an internal communication between two elements or an interaction relationship between two elements, unless otherwise expressly limited. For a person of ordinary skill in the art, the specific meanings of the foregoing terms in the present disclosure may be understood based on specific situations.

The technical features of the above embodiments may be combined arbitrarily. For the sake of brevity, all possible combinations of the technical features in the above embodiments are not described herein. However, as long as there is no contradiction in the combination of these technical features, they should be considered as falling within the scope of this specification.

The above embodiments merely illustrate several implementations of the present disclosure, and the descriptions thereof are more specific and detailed, but they should not be construed as limiting the protection scope of the present disclosure. It should be noted that for those of ordinary skill in the art, several variations and improvements can be made without departing from the inventive concept of the present disclosure, and all of these fall within the protection scope of the present disclosure.

## Claims

1. A cabin space control method, comprising:
receiving a control instruction for controlling a seat mode, wherein the seat mode integrates atomic capabilities of different control objects and has a preset execution manner, and the different control objects comprise at least two seats; and
in response to the control instruction, based on the atomic capabilities of the different control objects, linking the at least two seats to perform an action of changing a seat layout in the preset execution manner.

2. The method according to claim 1, wherein in response to the control instruction, based on the atomic capabilities of the different control objects, linking the at least two seats to perform the action of changing the seat layout in the preset execution manner, comprises:
in response to the control instruction, determining whether a starting condition of the seat mode is satisfied; and
in a case that the starting condition of the seat mode is satisfied, based on the atomic capabilities of the different control objects, linking the at least two seats to perform the action of changing the seat layout in the preset execution manner.

3. The method according to claim 2, wherein determining whether the starting condition of the seat mode is satisfied, comprises:
obtaining a driving state of a vehicle, an environment dataset of a cabin interior environment, a usage state of each of the at least two seats, and a usage state of a center armrest; and
determining whether the starting condition of the seat mode is satisfied based on the driving state, the environment dataset, the usage state of each seat, and the usage state of the center armrest.

4. The method according to claim 2, further comprising:
in a case that the starting condition of the seat mode is not satisfied, generating corresponding prompt information, and providing a prompt.

5. The method according to claim 1, wherein receiving the control instruction for controlling the seat mode, comprises:
when the vehicle is parked, determining that an activation condition of the seat mode is satisfied, and receiving the control instruction.

6. The method according to any one of claims 1 to 5, wherein parameters for the seat mode comprise a basic parameter and a custom parameter; and for an atomic capability of each of the control objects, the atomic capability comprises a trigger condition, a trigger, and an executed action;
receiving the control instruction for controlling the seat mode, comprises:
receiving a control instruction for controlling an adjusted seat mode; and
based on the atomic capabilities of the different control objects, linking the at least two seats to perform the action of changing the seat layout in the preset execution manner, comprises:
obtaining, based on atomic capabilities corresponding to adjusted parameters for the seat mode, trigger signals detected by triggers of corresponding atomic capabilities, wherein the atomic capabilities corresponding to the adjusted parameters comprise at least one of an atomic capability corresponding to an adjusted basic parameter or an atomic capability corresponding to an adjusted custom parameter; and
in a case that the trigger signals satisfy trigger conditions, linking the at least two seats to perform the action of changing the seat layout in the preset execution manner.

7. The method according to claim 6, further comprising: obtaining the adjusted seat mode by:
receiving an adjustment instruction for adjusting the parameters for the seat mode;
adjusting the basic parameter according to the adjustment instruction to generate the adjusted basic parameter; and/or
adjusting the custom parameter according to the adjustment instruction to generate the adjusted custom parameter; and
generating the adjusted seat mode according to at least one of the atomic capability corresponding to the adjusted basic parameter or the atomic capability corresponding to the adjusted custom parameter.

8. The method according to claim 7, further comprising:
determining whether an adjustment operation in the adjustment instruction conforms to a specification; and
in a case that the adjustment operation conforms to the specification, adjusting the basic parameter according to the adjustment operation to generate the adjusted basic parameter.

9. The method according to claim 1, further comprising:
receiving a generation instruction for generating a custom seat mode;
displaying a custom parameter for the custom seat mode;
receiving input information for the custom parameter to obtain custom parameter information; and
generating the custom seat mode according to an atomic capability corresponding to the custom parameter information.

10. The method according to claim 1, wherein the seat mode is a current seat mode; and
in response to the control instruction, based on the atomic capabilities of the different control objects, linking the at least two seats to perform the action of changing the seat layout in the preset execution manner, comprises:
in response to the control instruction, taking a seat position at an end of a previous seat mode as an initial position for the current seat mode;
determining difference data between the initial position for the current seat mode and a target position for the current seat mode; and
based on an atomic capability corresponding to the difference data, linking the at least two seats to perform the action of changing the seat layout in the preset execution manner;
and/or,
the method further comprises:
during a process of linking the at least two seats to perform the action of changing the seat layout in the preset execution manner, displaying prompt information for prompting that the seat mode is being changed, and receiving a control instruction for controlling a process progress.

11. A cabin space control apparatus, comprising:
a receiving module, configured to receive a control instruction for controlling a seat mode, wherein the seat mode integrates atomic capabilities of different control objects, and has a preset execution manner, and the different control objects comprise at least two seats; and
a linkage module, configured to: in response to the control instruction, based on the atomic capabilities of the different control objects, link the at least two seats to perform an action of changing a seat layout in the preset execution manner.

12. An electronic device, comprising at least one processor configured to implement the cabin space control method according to any one of claims 1 to 10.

13. A computer-readable storage medium, wherein the computer-readable storage medium stores a program that, when executed by at least one processor, implements the cabin space control method according to any one of claims 1 to 10.
